# DEMANDE DE BREVET EUROPEEN

(11) **EP 3 181 330 A1**
(43) Date de publication de la demande: **21.06.2017**
(21) Numéro de dépôt: 16203629.7
(22) Date de dépôt: 13.12.2016
(51) Int. Cl.: B29C 65/08, B26F 1/40

(54) **MODULE DE POINÇONNAGE ET DE SOUDAGE**

(30) Priorité: 16.12.2015 FR 1562482
(71) Demandeur: CORETEC, 35340 Liffre (FR)
(72) Inventeur: LE CORRE, Daniel, 35340 Liffre (FR); DEU, Pascal, 35340 Liffre (FR)
(74) Mandataire: Le Guen-Maillet

(57) **Abrégé**

L'invention concerne un module de poinçonnage et de soudage (100) prévu pour poinçonner une pièce principale (10) et souder une pièce secondaire (20) à la pièce principale (10). Le module (100) comporte entre autres :
- une première mâchoire (104) portant une matrice (108),
- une deuxième mâchoire (106) portant un poinçon (110),
- un bloc support (150) monté sur la première mâchoire (104) et présentant un porte-support (152) destiné à supporter la pièce secondaire (20) et mobile entre une position active et une position escamotée,
- un bloc de soudage (180) monté sur la première mâchoire (104) et présentant des tiges de soudage (182) mobiles entre une position active et une position escamotée.

Les mâchoires (104, 106) sont mobiles entre différentes positions pour assurer d'abord le poinçonnage, puis le soudage.

## Description

La présente invention concerne un module de poinçonnage et de soudage destiné à poinçonner une pièce principale, en particulier un pare-chocs, et à souder une pièce secondaire à cette pièce principale, en particulier un support de capteur.

La fixation d'un support de capteur à l'arrière d'un pare-chocs consiste classiquement en une étape de poinçonnage au cours de laquelle un trou est réalisé dans le pare-chocs, et une étape de fixation au cours de laquelle le support est fixé, en particulier soudé, au niveau du trou. Ces deux étapes nécessitent une poinçonneuse et une soudeuse qui sont deux machines distinctes entre lesquelles un transfert manuel du pare-chocs doit être réalisé. Le temps de cycle pour la fixation du support est donc relativement long.

Le document WO-A-2014169999 divulgue un module de poinçonnage et de soudage selon le préambule de la revendication 1.

Un objet de la présente invention est de proposer un module de poinçonnage et de soudage qui ne présente pas les inconvénients de l'art antérieur et qui en particulier permet de réaliser une double opération sur le même module.

A cet effet, est proposé un module de poinçonnage et de soudage prévu pour poinçonner une pièce principale et souder une pièce secondaire à la pièce principale, ledit module comportant :
- un châssis fixe,
- une première mâchoire portant une matrice, et montée mobile en translation sur le châssis le long d'une direction de translation,
- une deuxième mâchoire portant un poinçon, et montée mobile en translation sur le châssis le long de ladite direction de translation,
- un bloc support monté sur la première mâchoire,
- un bloc de soudage monté sur la première mâchoire et présentant des tiges de soudage et un deuxième moyen de déplacement destiné à déplacer les tiges de soudage entre une position active dans laquelle les tiges de soudage sont approchées de la pièce secondaire pour la souder à la pièce principale, et une position escamotée dans laquelle les tiges de soudage sont éloignées de la pièce secondaire,
la première mâchoire étant mobile entre une position écartée dans laquelle la matrice est à distance de la pièce principale, une position resserrée dans laquelle la matrice est en contact avec la pièce principale lorsque le porte-support est en position escamotée, et
la deuxième mâchoire étant mobile entre une position écartée dans laquelle le poinçon est à distance de la pièce principale, une position resserrée dans laquelle le poinçon transperce la pièce principale,
le module de poinçonnage et de soudage étant caractérisé
- en ce que le bloc support présente un porte-support destiné à supporter la pièce secondaire et un premier moyen de déplacement destiné à déplacer le porte-support entre une position active dans laquelle la pièce secondaire se positionne entre la matrice et la pièce principale et une position escamotée dans laquelle la pièce secondaire ne se positionne pas entre la matrice et la pièce principale,
- en ce que entre la position écartée et la position resserrée, la première mâchoire est mobile vers une position intermédiaire resserrée dans laquelle la pièce secondaire est en contact avec la pièce principale lorsque le porte-support est en position active,
- en ce que entre la position écartée et la position resserrée, la deuxième mâchoire est mobile entre une position intermédiaire écartée dans laquelle la deuxième mâchoire est en contact avec la pièce principale sans que le poinçon la traverse et entre la position intermédiaire écartée et la position resserrée, une position de butée dans laquelle la deuxième mâchoire est en contact avec la pièce principale sans que le poinçon ne traverse ladite pièce principale, et
- en ce que le module comporte en outre un module d'activation comportant des moyens pour positionner la première mâchoire et la deuxième mâchoire dans chacune des positions.

Avantageusement, lesdits moyens du module d'activation sont constitués :
- d'un moyen d'activation comportant un premier élément fixé à la première mâchoire, un deuxième élément fixé à la deuxième mâchoire et un élément d'activation, le premier élément et le deuxième élément étant mobiles en translation l'un par rapport à l'autre selon la direction de translation sous l'action de l'élément d'activation,
- d'au moins un moyen de rappel disposé entre la première mâchoire et le châssis et qui tend à contraindre la première mâchoire en position resserrée,
- d'une première butée haute fixe par rapport au châssis et qui est prévue pour arrêter la deuxième mâchoire en position écartée,
- d'une première butée basse fixe par rapport au châssis et qui est prévue pour arrêter la première mâchoire en position resserrée,
- d'une deuxième butée basse fixe par rapport au châssis et qui est prévue pour arrêter la première mâchoire en position intermédiaire resserrée, et
- d'une deuxième butée haute fixe par rapport au châssis et qui est prévue pour arrêter la deuxième mâchoire en position intermédiaire écartée.

Avantageusement, la deuxième butée basse est mobile entre une position active dans laquelle la deuxième butée basse est positionnée de manière à pouvoir être en appui contre une surface d'appui de la première mâchoire, et une position escamotée dans laquelle la deuxième butée basse est positionnée de manière à ne pas pouvoir être en appui contre la surface d'appui.

Avantageusement, la deuxième butée haute est mobile entre une position active dans laquelle la deuxième butée haute est positionnée de manière à pouvoir être en appui contre une surface d'appui de la deuxième mâchoire, et une position escamotée dans laquelle la deuxième butée haute est positionnée de manière à ne pas pouvoir être en appui contre la surface d'appui.

Avantageusement, le module comporte un dévêtisseur présentant un sabot mobile en translation parallèlement à la direction de translation et destiné à venir en appui contre la pièce principale lorsque la deuxième mâchoire est en position de butée ou intermédiaire écartée ou resserrée et un dispositif de force destiné à appliquer, sur le sabot, une force orientée vers la première mâchoire et parallèle à la direction de translation.

Avantageusement, le dispositif de force consiste en un vérin double effet avec deux chambres et présentant une première partie fixe sur la deuxième mâchoire et une deuxième partie mobile en translation par rapport à la première partie parallèlement à la direction de translation et portant le sabot, et chaque chambre est fluidiquement connectée à un générateur de pression à travers une valve.

Avantageusement, le porte-support présente un plot qui est concentrique avec la matrice lorsque le porte-support est en position active.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un module de poinçonnage et de soudage selon l'invention dans une position initiale de fonctionnement, et
les Figs. 2 à 10 représentent le module dans différentes positions de fonctionnement.

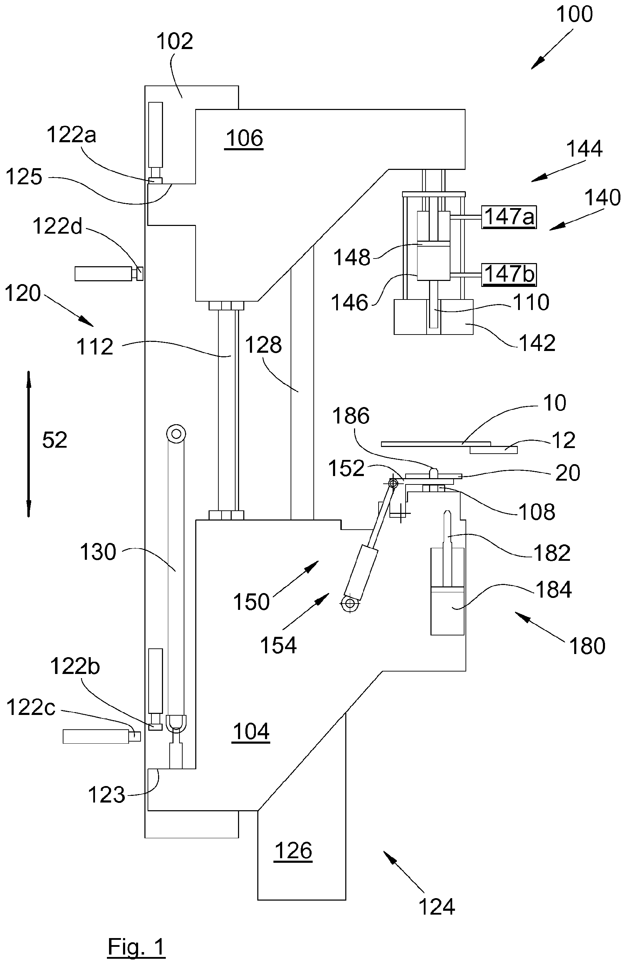

La Fig. 1 montre un module de poinçonnage et de soudage 100, appelé par la suite « module ». Le module 100 est prévu pour poinçonner une pièce principale 10, en particulier un pare-chocs, et souder une pièce secondaire 20, en particulier un support de capteur, à ladite pièce principale 10 au niveau du trou laissé par le poinçonnage. La pièce principale 10 est placée sur un gabarit 12.

Le module 100 comprend :
- un châssis 102,
- une première mâchoire 104 portant une matrice 108, et
- une deuxième mâchoire 106 portant un poinçon 110.

Le châssis 102 se présente sous la forme d'un bloc rigide qui est destiné à être fixé, par exemple sur la structure d'une machine-outil.

Le module 100 présente également une unité de contrôle qui commande l'activation des différents éléments du module 100.

La première mâchoire 104 et la deuxième mâchoire 106 sont chacune montées mobiles en translation sur le châssis 102 le long d'une même direction de translation 52.

La première mâchoire 104 est mobile entre une position écartée dans laquelle la matrice 108 est à distance de la pièce principale 10 et une position resserrée dans laquelle la matrice 108 est en contact avec la pièce principale 10 pour coopérer avec le poinçon 110.

La deuxième mâchoire 106 est mobile entre une position écartée dans laquelle le poinçon 110 est à distance de la pièce principale 10 et une position resserrée dans laquelle le poinçon 110 transperce la pièce principale 10 pour coopérer avec la matrice 108. Entre la position écartée et la position resserrée, la deuxième mâchoire 106 est apte à prendre une position intermédiaire écartée dans laquelle la deuxième mâchoire 106 est en contact avec la pièce principale 10 sans que le poinçon 110 ne traverse ladite pièce principale 10. Entre la position intermédiaire écartée et la position resserrée, la deuxième mâchoire 106 est apte à prendre, une position de butée dans laquelle la deuxième mâchoire 106 est en contact avec la pièce principale 10 sans que le poinçon 110 ne traverse ladite pièce principale 10.

La première mâchoire 104 se déplace d'un côté de la pièce principale 10 et la deuxième mâchoire 106 se déplace de l'autre côté de la pièce principale 10. La première mâchoire 104 et la deuxième mâchoire 106 se placent donc de part et d'autre de la pièce principale 10 dans une position écartée et se rapprochent de part et d'autre de la pièce principale 10 dans une position resserrée.

Le module 100 comprend un module d'activation 120 comportant des moyens configurés pour positionner, sur commande de l'unité de contrôle, la première mâchoire 104 et la deuxième mâchoire 106 à l'une ou l'autre des positions.

Le module 100 comporte également un bloc support 150 qui présente un porte-support 152 destiné à supporter la pièce secondaire 20. Le porte-support 152 est monté mobile sur la première mâchoire 104 entre une position active dans laquelle la pièce secondaire 20 se positionne entre la matrice 108 et la pièce principale 10 et une position escamotée dans laquelle la pièce secondaire 20 ne se positionne pas entre la matrice 108 et la pièce principale 10. A cette fin, le bloc support 150 présente un premier moyen de déplacement 154 commandé par l'unité de contrôle et destiné à déplacer le porte-support 152 de la position escamotée à la position active et inversement. Entre la position écartée et la position resserrée qui correspond à la position escamotée du porte-support 152, la première mâchoire 104 peut prendre une position intermédiaire resserrée dans laquelle la pièce secondaire 20 est en contact avec la pièce principale 10 lorsque le porte-support 152 est en position active.

Le module 100 comporte également un bloc de soudage 180 qui présente des tiges de soudage 182, en particulier des sonotrodes. Les tiges de soudage 182 sont montées mobiles sur la première mâchoire 104 entre une position active dans laquelle les tiges de soudage 182 sont approchées de la pièce secondaire 20 pour la souder à la pièce principale 10, et une position escamotée dans laquelle les tiges de soudage 182 sont éloignées de la pièce secondaire 20. A cette fin, le bloc de soudage 180 présente un deuxième moyen de déplacement 184 commandé par l'unité de contrôle et destiné à déplacer les tiges de soudage 182 de la position escamotée à la position active et inversement. L'activation des tiges de soudage 182 est commandée par l'unité de contrôle.

Le module 100 présente également une première butée haute 122a, une deuxième butée haute 122d, une première butée basse 122b et une deuxième butée basse 122c.

La deuxième mâchoire 106 se positionne contre la première butée haute 122a lorsqu'elle est en position écartée. La première mâchoire 104 se positionne contre la première butée basse 122b lorsqu'elle est en position resserrée et que le porte-support 152 est en position escamotée. La première mâchoire 104 se positionne contre la deuxième butée basse 122c lorsqu'elle est en position intermédiaire resserrée. La différence de position entre la première butée basse 122b et la deuxième butée basse 122c permet de compenser la différence de déplacement que peut effectuer la première mâchoire 104 du fait de la présence ou non du porte-support 152 en position active et de la pièce secondaire 20. La deuxième butée haute 122d est prévue pour arrêter la deuxième mâchoire 106 en position intermédiaire écartée. La différence de position entre la première butée haute 122a et la deuxième butée haute 122d permet de limiter le déplacement de la deuxième mâchoire 106 lors de la mise en place du porte-support 152.

La Fig. 1 montre le module 100 dans une position dans laquelle la première mâchoire 104 et la deuxième mâchoire 106 sont toutes les deux en position écartée, le porte-support 152 est en position active et les tiges de soudage 182 sont en position escamotée.

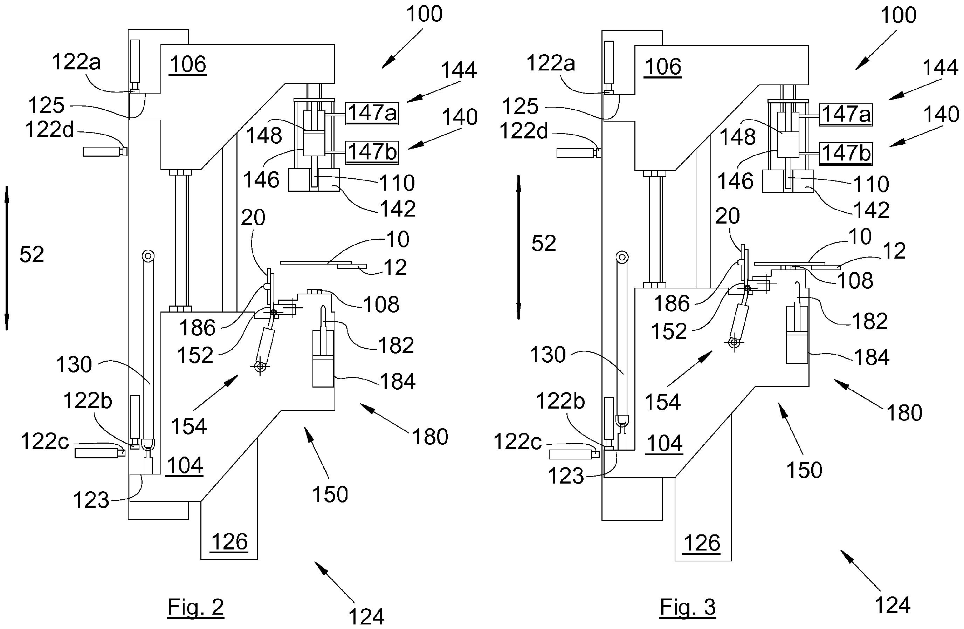

La Fig. 2 montre le module 100 dans une position dans laquelle la première mâchoire 104 et la deuxième mâchoire 106 sont toutes les deux en position écartée, le porte-support 152 est en position escamotée et les tiges de soudage 182 sont en position escamotée.

La Fig. 3 montre le module 100 dans une position dans laquelle la première mâchoire 104 est en position resserrée ici contre la première butée basse 122b, la deuxième mâchoire 106 est en position écartée ici contre la première butée haute 122a, le porte-support 152 est en position escamotée et les tiges de soudage 182 sont en position escamotée.

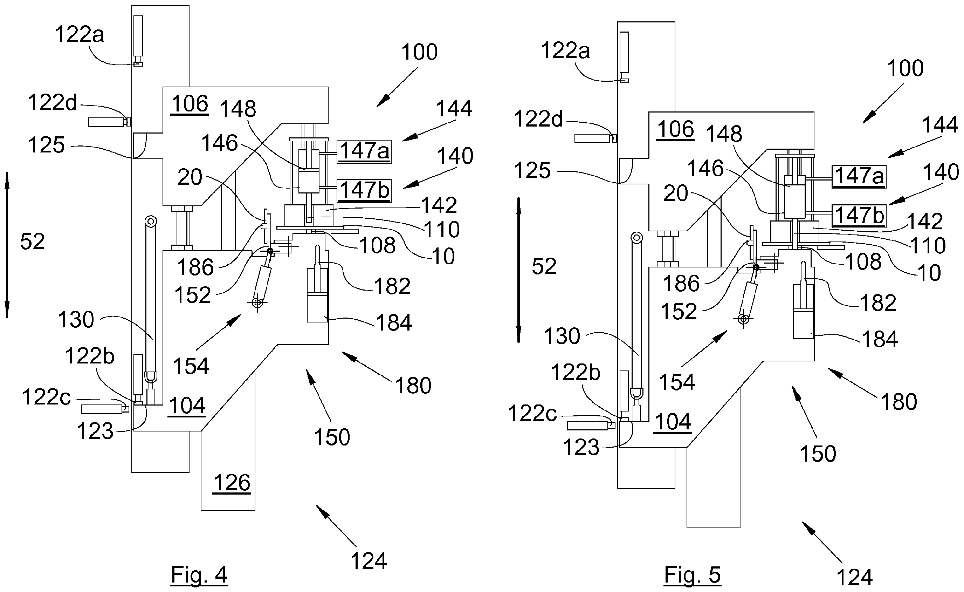

La Fig. 4 montre le module 100 dans une position dans laquelle la première mâchoire 104 est en position resserrée, la deuxième mâchoire 106 se rapproche de la position resserrée et est en position de butée, le porte-support 152 est en position escamotée et les tiges de soudage 182 sont en position escamotée.

La Fig. 5 montre le module 100 dans une position de poinçonnage dans laquelle le poinçon a traversé la pièce principale 10 en y créant un trou, la première mâchoire 104 est en position resserrée, la deuxième mâchoire 106 est en position resserrée, le porte-support 152 est en position escamotée et les tiges de soudage 182 sont en position escamotée.

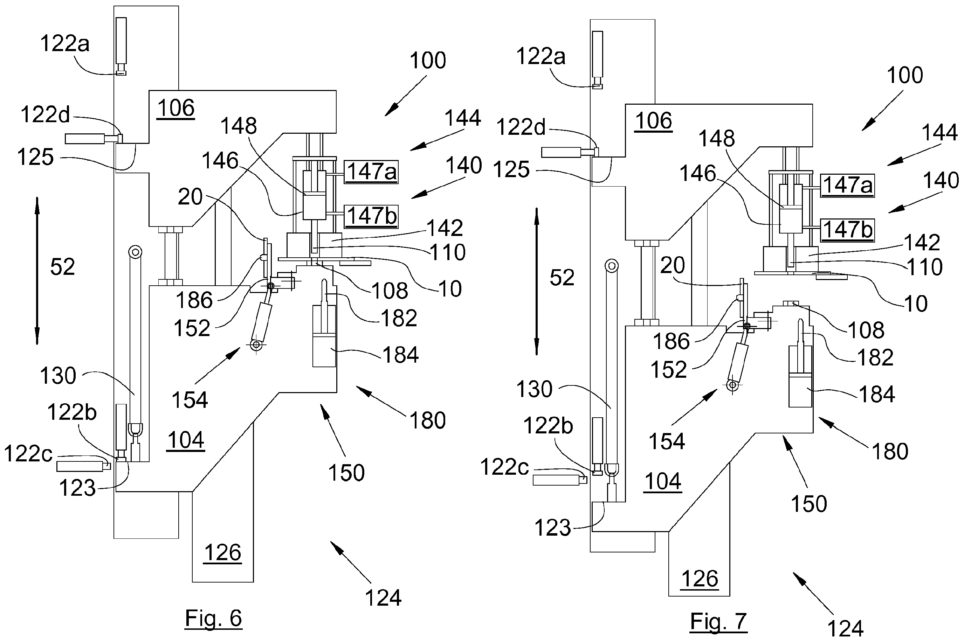

La Fig. 6 montre le module 100 dans une position dans laquelle la première mâchoire 104 est en position resserrée, la deuxième mâchoire 106 s'écarte de la position resserrée jusqu'à la position intermédiaire écartée, ici contre la deuxième butée haute 122d, le porte-support 152 est en position escamotée et les tiges de soudage 182 sont en position escamotée. Dans la position intermédiaire écartée, la deuxième mâchoire 106 reste en contact avec la pièce principale 10, ici via un sabot 142 et elle est déterminée ici par la mise en butée de la deuxième mâchoire 106 contre la deuxième butée haute 122d.

La Fig. 7 montre le module 100 dans une position dans laquelle la première mâchoire 104 est en position écartée, la deuxième mâchoire 106 est dans la position intermédiaire écartée, le porte-support 152 est en position escamotée et les tiges de soudage 182 sont en position escamotée.

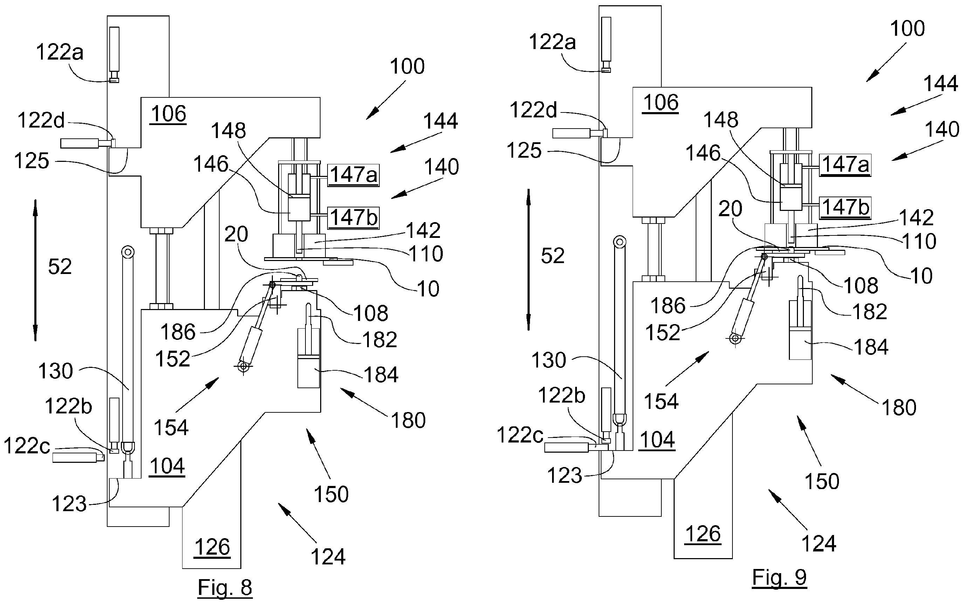

La Fig. 8 montre le module 100 dans une position dans laquelle la première mâchoire 104 est en position écartée, la deuxième mâchoire 106 est dans la position intermédiaire écartée, le porte-support 152 est en position active et les tiges de soudage 182 sont en position escamotée.

La Fig. 9 montre le module 100 dans une position dans laquelle la première mâchoire 104 est en position intermédiaire resserrée, ici contre la deuxième butée basse 122c, la deuxième mâchoire 106 est dans la position intermédiaire écartée, le porte-support 152 est en position active et les tiges de soudage 182 sont en position escamotée.

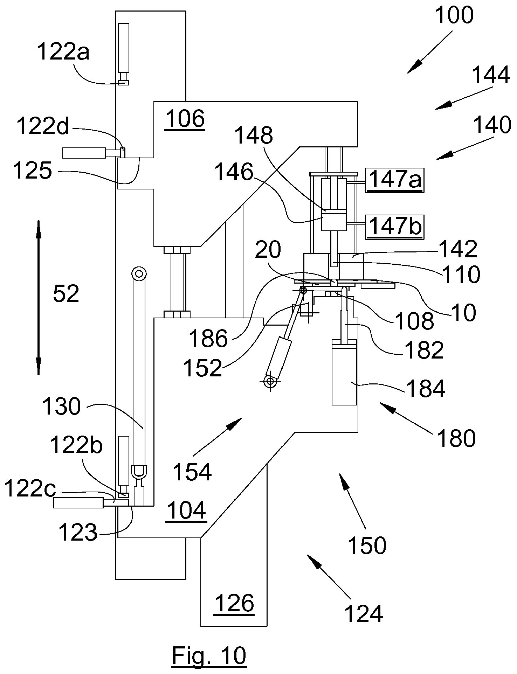

La Fig. 10 montre le module 100 dans une position dans laquelle la première mâchoire 104 est en position intermédiaire resserrée, la deuxième mâchoire 106 est en position intermédiaire écartée, le porte-support 152 est en position active et les tiges de soudage 182 sont en position active pour souder la pièce secondaire 20 à la pièce principale 10.

La procédure de poinçonnage et de soudage consiste à partir de la position de la Fig. 1 à placer la pièce secondaire 20 sur le porte-support 152 et la pièce principale 10 sur le gabarit 12. Le porte-support 152 passe alors en position escamotée (Fig. 2). La matrice 108 est alors plaquée contre la pièce principale 10 (Fig. 3). La deuxième mâchoire 106 est alors approchée de la pièce principale 10 en passant par la position de butée (Fig. 4) jusqu'à la position resserrée lors de la pénétration du poinçon 108 dans la pièce principale 10 (Fig. 5). Après poinçonnage, la deuxième mâchoire 106 est écartée de manière à dégager le poinçon 110 jusqu'à la position de butée (Fig. 4). Le mouvement de la deuxième mâchoire 106 est alors poursuivi jusqu'à venir en butée contre la deuxième butée haute 122d pour venir en position intermédiaire écartée (Fig. 6). La première mâchoire 104 est alors écartée de la pièce principale 10 (Fig. 7), Le porte-support 152 passe alors en position active (Fig. 8). La première mâchoire 104 est alors placée en position intermédiaire resserrée (Fig. 9). La pièce secondaire 20 est alors en position pour être soudée à la pièce principale 10 à l'aide des tiges de soudage 182 (Fig. 10) qui passent en position active. Les tiges de soudage 182 repassent alors en position escamotée (Fig. 9). La deuxième mâchoire 106 est alors écartée jusqu'à la position écartée, puis la première mâchoire 104 est écartée jusqu'à la position écartée et une nouvelle pièce secondaire 20 et une nouvelle pièce principale 10 peuvent être mises en place pour repartir de la position initiale (Fig. 1).

Ainsi, avec un seul module 100, il est possible de poinçonner une pièce principale 10 et d'y souder une pièce secondaire 20, réduisant ainsi le temps de cycle par rapport à deux modules distincts.

Les déplacements de la première mâchoire 104 et de la deuxième mâchoire 106 sont assurés par des moyens de guidage 112 qui prennent ici la forme de deux rails (dont un seul est visible sur les Figs.) qui sont fixés de part et d'autre du châssis 102 et de rainures associées qui sont réalisées dans les mâchoires 104 et 106 et dans lesquelles se logent les rails 112.

Pour assurer un bon guidage des mâchoires 104 et 106, les rainures et les rails 112 sont en prise sur une grande distance.

Les moyens du module d'activation 120 sont constitués ici :
- d'un moyen d'activation 124, comportant un premier élément 126 fixé à la première mâchoire 104, un deuxième élément 128 fixé à la deuxième mâchoire 106 et un élément d'activation, le premier élément 126 et le deuxième élément 128 étant mobiles en translation l'un par rapport à l'autre selon la direction de translation 52 sous l'action de l'élément d'activation,
- d'au moins un moyen de rappel 130 disposé entre la première mâchoire 104 et le châssis 102 et qui tend à contraindre la première mâchoire 104 en position resserrée,
- de la première butée haute 122a fixe par rapport au châssis 102 et qui est prévue pour arrêter la deuxième mâchoire 106 en position écartée,
- de la deuxième butée haute 122d fixe par rapport au châssis 102 et qui est prévue pour arrêter la deuxième mâchoire 106 en position intermédiaire écartée.
- de la première butée basse 122b fixe par rapport au châssis 102 et qui est prévue pour arrêter la première mâchoire 104 en position resserrée, et
- de la deuxième butée basse 122c fixe par rapport au châssis 102 et qui est prévue pour arrêter la première mâchoire 104 en position intermédiaire resserrée.

Dans la mesure où la première butée basse 122b et la deuxième butée basse 122c viennent en butée contre la même surface d'appui 123 de la première mâchoire 104, la deuxième butée basse 122c est mobile entre une position active (Figs. 9 et 10) dans laquelle la deuxième butée basse 122c est positionnée de manière à pouvoir être en appui contre la surface d'appui 123, et une position escamotée (Figs. 1 à 8) dans laquelle la deuxième butée basse 122c est positionnée de manière à ne pas pouvoir être en appui contre la surface d'appui 123. La deuxième butée basse 122c prend par exemple la forme d'un vérin commandé par l'unité de contrôle.

Le moyen d'activation 124 prend ici la forme d'un vérin 124 où le premier élément 126 est le cylindre 126 du vérin 124, où le deuxième élément 128 est la tige 128 du vérin 124 dont l'extrémité est fixée à la deuxième mâchoire 106 et où l'élément d'activation est constitué par les éléments du vérin 124 qui génèrent le déplacement de la tige 128 dans le cylindre 126 sur commande de l'unité de contrôle. Bien sûr le montage inverse est également possible.

L'élément d'activation présente un premier sens d'activation selon lequel le cylindre 126 et la tige 128 sont déplacés de manière à ce que les mâchoires 104 et 106 soient déplacées vers leurs positions resserrées, et un deuxième sens d'activation selon lequel le cylindre 126 et la tige 128 déplacés de manière à ce que les mâchoires 104 et 106 soient déplacées vers leurs positions écartées.

D'une manière générale et du fait de la présence du moyen de rappel 130, la première mâchoire 104 se déplace lorsque la deuxième mâchoire 106 est bloquée et la deuxième mâchoire 106 se déplace lorsque la première mâchoire 104 est bloquée.

Le fonctionnement du module d'activation 120 est celui-ci à partir d'une position où la première mâchoire 104 est en position écartée (Figs. 1, 2, 8) et doit atteindre sa position resserrée ou intermédiaire resserrée, c'est-à-dire lorsque la deuxième mâchoire 106 est en appui contre la première butée haute 122a (Figs. 1 et 2) ou contre la deuxième butée haute 122d :
- l'élément d'activation est activé selon le premier sens d'activation,
- sous l'effet du moyen de rappel 130, le premier élément 126 se déplace par rapport au deuxième élément 128 qui reste fixe, entraînant le déplacement de la première mâchoire 104 vers sa position resserrée ou intermédiaire resserrée selon le cas, tandis que la deuxième mâchoire 106 reste en appui,
- le déplacement de la première mâchoire 104 se poursuit jusqu'à ce qu'elle atteigne sa position resserrée ou intermédiaire resserrée, c'est-à-dire jusqu'à ce que ladite première mâchoire 104 est en butée contre la première butée basse 122b ou la deuxième butée basse 122c.

Lorsque la deuxième mâchoire 106 est dans la position intermédiaire écartée, la mise en butée de la première mâchoire 104 entraîne l'arrêt du déplacement par l'arrêt de l'élément d'activation.

Lorsque la deuxième mâchoire 106 doit atteindre la position resserrée, le déplacement se poursuit et du fait de la mise en butée de la première mâchoire 104, le deuxième élément 128 se déplace par rapport au premier élément 126 qui reste fixe, entraînant le déplacement de la deuxième mâchoire 106 vers sa position de butée puis resserrée, tandis que la première mâchoire 104 reste en position resserrée ou intermédiaire resserrée,
- le déplacement de la deuxième mâchoire 106 se poursuit jusqu'à ce qu'elle atteigne sa position resserrée déterminée par l'arrêt de l'élément d'activation.

A l'inverse, le fonctionnement du module d'activation 120 est celui-ci à partir d'une position où la première mâchoire 104 est dans une position resserrée (Fig. 5) ou intermédiaire resserrée (Fig. 10) et doit atteindre sa position écartée, c'est-à-dire lorsque la deuxième mâchoire 106 est en position resserrée ou de butée ou intermédiaire écartée, et où la première mâchoire 104 est en butée contre la première butée basse 122b ou la deuxième butée basse 122c:
- l'élément d'activation est alors activé selon le deuxième sens d'activation,
- le deuxième élément 128 se déplace par rapport au premier élément 126 qui reste fixe, entraînant le déplacement de la deuxième mâchoire 106 vers sa position écartée ou intermédiaire écartée, tandis que la première mâchoire 104 reste en position,
- la deuxième mâchoire 106 se déplace alors jusqu'à ce qu'elle atteigne sa position écartée ou intermédiaire écartée et vienne en butée contre la première butée haute 122a ou la deuxième butée haute 122d,
- le premier élément 126 se déplace par rapport au deuxième élément 128 qui reste fixe, entraînant le déplacement de la première mâchoire 104 vers sa position écartée, tandis que la deuxième mâchoire 106 reste en position,
- le déplacement de la première mâchoire 104 se poursuit jusqu'à ce qu'elle atteigne sa position écartée déterminée par l'arrêt de l'élément d'activation.

Le module d'activation 120 qui est décrit ici est particulièrement simple puisqu'il ne comporte qu'un seul élément d'activation, et que la commande de cet élément d'activation dans un sens ou un autre permet le fonctionnement du module 100 en ouverture et en fermeture.

Le moyen de rappel 130 prend ici la forme d'un ressort de traction dont l'une des extrémités est fixée sur la première mâchoire 104 et dont l'autre extrémité est fixée sur le châssis 102 en direction de la deuxième mâchoire 106.

La mise en place de la position intermédiaire écartée de la deuxième mâchoire 106 qui est différente de sa position écartée permet de réduire le temps pour écarter les mâchoires 104 et 106 et passer le porte-support 152 en position active.

Dans la mesure où la première butée haute 122a et la deuxième butée haute 122d viennent en butée contre la même surface d'appui 125 de la deuxième mâchoire 106, la deuxième butée haute 122d est mobile entre une position active (Figs. 6 à 10) dans laquelle la deuxième butée haute 122d est positionnée de manière à pouvoir être en appui contre la surface d'appui 125, et une position escamotée (Figs. 1 à 5) dans laquelle la deuxième butée haute 122d est positionnée de manière à ne pas pouvoir être en appui contre la surface d'appui 125. La deuxième butée haute 122d prend par exemple la forme d'un vérin commandé par l'unité de contrôle.

Le passage du porte-support 152 de la position escamotée à la position active s'effectue ici par rotation autour d'un axe de rotation perpendiculaire à la direction de translation 52. Mais ce passage peut s'effectuer par une rotation autour d'un axe différent, ou par un déplacement différent comme par exemple une translation.

Le premier moyen de déplacement 154 prend ici la forme d'un vérin dont une extrémité est fixée mobile en rotation sur la première mâchoire 104 et dont l'autre extrémité est fixée mobile au porte-support 152. L'activation du vérin 154 par l'unité de contrôle dans un sens ou dans l'autre va entraîner le passage du porte-support 152 de la position escamotée à la position active et inversement.

Le deuxième moyen de déplacement 184 prend également ici la forme d'un vérin dont la tige est solidaire des tiges de soudage 182. L'activation du vérin 184 par l'unité de contrôle dans un sens ou dans l'autre va entraîner le passage des tiges de soudage 182 de la position escamotée à la position active ou l'inverse.

La deuxième mâchoire 106 présente un dévêtisseur 140 qui comporte un sabot 142 mobile en translation parallèlement à la direction de translation 52 et un dispositif de force 144 qui est destiné à appliquer, sur le sabot 142, une force parallèle à la direction de translation 52. Le sabot 142 présente un alésage à travers lequel passe le poinçon 110. Comme cela est expliqué ci-après, le dispositif de force 144 permet de générer une force orientée vers la première mâchoire 104 parallèlement à la direction de translation 52, selon une intensité plus ou moins importante. Le sens et l'intensité de la force générés par le dispositif de force 144 sont commandés par l'unité de contrôle qui commande le dispositif de force 144 en fonction de l'étape du processus de poinçonnage et de soudage. Le sabot 142 vient en appui contre la pièce principale 10 lorsque la deuxième mâchoire 106 est en position de butée ou intermédiaire écartée ou en position resserrée.

Ainsi, lors de la mise en position de butée (Fig. 4) avant le poinçonnage, le sabot 144 vient en appui contre la pièce principale 10 et le dispositif de force 144 ne délivre aucune force particulière pour permettre l'enfoncement du sabot 144 lors de la poursuite du déplacement de la deuxième mâchoire 106 jusqu'à la position resserrée (Fig. 5) sans que la pièce principale 10 ne se déforme.

Lors du retrait du poinçon 110 de la pièce principale 10, c'est-à-dire lorsque la deuxième mâchoire 106 repasse en position de butée (passage de la Fig. 5 à la Fig. 4), le dispositif de force 144 délivre une force de pression orientée vers la première mâchoire 104. La force de pression maintient le sabot 142 en pression contre la pièce principale 10 autour du poinçon 110 afin d'éviter la déformation de la pièce principale 10. Cette force de pression est relativement faible et est par exemple de l'ordre de 65 DaN.

Lors du soudage (Fig. 10), le dispositif de force 144 délivre une force de pression orientée vers la première mâchoire 104, qui maintient le sabot 142 en pression contre la pièce principale 10 afin de maintenir la pièce principale 10 en position en contrant la pression opposée des tiges de soudage 182. Cette force de pression est relativement forte et est par exemple de l'ordre de 140 DaN.

Dans le mode de réalisation de l'invention présenté sur les Figs. 1 à 10, le dispositif de force 144 consiste en un vérin double effet avec deux chambres présentant une première partie 146 fixe sur la deuxième mâchoire 106 et portant ici le poinçon 110 et une deuxième partie 148 mobile en translation par rapport à la première partie 146 parallèlement à la direction de translation 52 et portant le sabot 142.

La création d'une force dans un sens ou dans l'autre est réalisée par mise en pression de l'une et/ou de l'autre des chambres. A cette fin, chaque chambre du cylindre est fluidiquement connectée à une valve 147a-b. Les valves 147a-b sont elles-mêmes fluidiquement connectées à un même générateur de pression et sont commandés indépendamment par l'unité de contrôle.

Dans le mode de réalisation de l'invention présenté sur les Figs. 1 à 10, la première partie 146 est le cylindre et la deuxième partie 148 est le piston dont la tige est solidaire du sabot 142 et sort du cylindre 146 à l'opposé de la première mâchoire 104.

Ainsi, lors de la mise en position de butée (Fig. 4) avant le poinçonnage, les deux valves 147a-b sont mises à l'échappement ne générant ainsi aucune force particulière.

Lors du retrait du piston 110 et le maintien en appui du sabot 142 contre la première pièce 10, les deux valves 147a-b sont ouvertes et les deux chambres sont mises sous une même pression générant ainsi par différence une légère force de pression orientée vers la première mâchoire 104.

Lors du soudage, la valve 147b connectée à la chambre sans tige est mise à l'échappement et la valve 147a connectée à la chambre avec tige est ouverte pour mettre la chambre correspondante sous pression. Une forte force de pression est alors générée.

Ce mode de réalisation est particulièrement simple, mais bien sûr dans le cas d'une architecture différente du dispositif de force 144, les commandes des valves 147a-b pourront être différentes.

Pour assurer le centrage de la pièce secondaire 20 par rapport à la pièce principale 10 lors du soudage, le porte-support 152 présente un plot 186 qui est concentrique avec la matrice 108 lorsque le porte-support 152 est en position active. Ainsi, lorsque la première mâchoire 104 passe en position intermédiaire resserrée (Fig. 9), le plot 186 s'insère dans le trou réalisé lors du poinçonnage dans la pièce principale 10, assurant ainsi le bon positionnement de la pièce secondaire 20 avant le soudage. La hauteur du plot 186 doit être suffisante pour dépasser de la pièce secondaire 20.

## Revendications

1. Module de poinçonnage et de soudage (100) prévu pour poinçonner une pièce principale (10) et souder une pièce secondaire (20) à la pièce principale (10), ledit module (100) comportant :
- un châssis (102) fixe,
- une première mâchoire (104) portant une matrice (108), et montée mobile en translation sur le châssis (102) le long d'une direction de translation (52),
- une deuxième mâchoire (106) portant un poinçon (110), et montée mobile en translation sur le châssis (102) le long de ladite direction de translation (52),
- un bloc support (150) monté sur la première mâchoire (104),
- un bloc de soudage (180) monté sur la première mâchoire (104) et présentant des tiges de soudage (182) et un deuxième moyen de déplacement (184) destiné à déplacer les tiges de soudage (182) entre une position active dans laquelle les tiges de soudage (182) sont approchées de la pièce secondaire (20) pour la souder à la pièce principale (10), et une position escamotée dans laquelle les tiges de soudage (182) sont éloignées de la pièce secondaire (20),
la première mâchoire (104) étant mobile entre une position écartée dans laquelle la matrice (108) est à distance de la pièce principale (10), une position resserrée dans laquelle la matrice (108) est en contact avec la pièce principale (10) lorsque le porte-support (152) est en position escamotée, et
la deuxième mâchoire (106) étant mobile entre une position écartée dans laquelle le poinçon (110) est à distance de la pièce principale (10), une position resserrée dans laquelle le poinçon (110) transperce la pièce principale (10),
le module de poinçonnage et de soudage (100) étant **caractérisé**
- **en ce que** le bloc support (150) présente un porte-support (152) destiné à supporter la pièce secondaire (20) et un premier moyen de déplacement (154) destiné à déplacer le porte-support (152) entre une position active dans laquelle la pièce secondaire (20) se positionne entre la matrice (108) et la pièce principale (10) et une position escamotée dans laquelle la pièce secondaire (20) ne se positionne pas entre la matrice (108) et la pièce principale (10),
- **en ce que** entre la position écartée et la position resserrée, la première mâchoire (104) est mobile vers une position intermédiaire resserrée dans laquelle la pièce secondaire (20) est en contact avec la pièce principale (10) lorsque le porte-support (152) est en position active,
- **en ce que** entre la position écartée et la position resserrée, la deuxième mâchoire (106) est mobile entre une position intermédiaire écartée dans laquelle la deuxième mâchoire (106) est en contact avec la pièce principale (10) sans que le poinçon (110) la traverse et entre la position intermédiaire écartée et la position resserrée, une position de butée dans laquelle la deuxième mâchoire (106) est en contact avec la pièce principale (10) sans que le poinçon (110) ne traverse ladite pièce principale (10), et
- **en ce que** le module (100) comporte en outre un module d'activation (120) comportant des moyens pour positionner la première mâchoire (104) et la deuxième mâchoire (106) dans chacune des positions.

2. Module (100) selon la revendication 1, **caractérisé en ce que** lesdits moyens du module d'activation (120) sont constitués :
- d'un moyen d'activation (124), comportant un premier élément (126) fixé à la première mâchoire (104), un deuxième élément (128) fixé à la deuxième mâchoire (106) et un élément d'activation, le premier élément (126) et le deuxième élément (128) étant mobiles en translation l'un par rapport à l'autre selon la direction de translation (52) sous l'action de l'élément d'activation,
- d'au moins un moyen de rappel (130) disposé entre la première mâchoire (104) et le châssis (102) et qui tend à contraindre la première mâchoire (104) en position resserrée,
- d'une première butée haute (122a) fixe par rapport au châssis (102) et qui est prévue pour arrêter la deuxième mâchoire (106) en position écartée,
- d'une première butée basse (122b) fixe par rapport au châssis (102) et qui est prévue pour arrêter la première mâchoire (104) en position resserrée,
- d'une deuxième butée basse (122c) fixe par rapport au châssis (102) et qui est prévue pour arrêter la première mâchoire (104) en position intermédiaire resserrée, et
- d'une deuxième butée haute (122d) fixe par rapport au châssis (102) et qui est prévue pour arrêter la deuxième mâchoire (106) en position intermédiaire écartée.

3. Module (100) selon la revendication 2, **caractérisé en ce que** la deuxième butée basse (122c) est mobile entre une position active dans laquelle la deuxième butée basse (122c) est positionnée de manière à pouvoir être en appui contre une surface d'appui (123) de la première mâchoire (104), et une position escamotée dans laquelle la deuxième butée basse (122c) est positionnée de manière à ne pas pouvoir être en appui contre la surface d'appui (123).

4. Module (100) selon l'une des revendications 2 ou 3, **caractérisé en ce que** la deuxième butée haute (122d) est mobile entre une position active dans laquelle la deuxième butée haute (122d) est positionnée de manière à pouvoir être en appui contre une surface d'appui (125) de la deuxième mâchoire (106), et une position escamotée dans laquelle la deuxième butée haute (122d) est positionnée de manière à ne pas pouvoir être en appui contre la surface d'appui (125).

5. Module (100) selon l'une des revendications 1 à 4, **caractérisé en ce qu'**il comporte un dévêtisseur (140) présentant un sabot (142) mobile en translation parallèlement à la direction de translation (52) et destiné à venir en appui contre la pièce principale (10) lorsque la deuxième mâchoire (106) est en position de butée ou intermédiaire écartée ou resserrée et un dispositif de force (144) destiné à appliquer, sur le sabot (142), une force orientée vers la première mâchoire (104) et parallèle à la direction de translation (52).

6. Module (100) selon la revendication 5, **caractérisé en ce que** le dispositif de force (144) consiste en un vérin double effet avec deux chambres et présentant une première partie (146) fixe sur la deuxième mâchoire (106) et une deuxième partie (148) mobile en translation par rapport à la première partie (146) parallèlement à la direction de translation (52) et portant le sabot (142), et **en ce que** chaque chambre est fluidiquement connectée à un générateur de pression à travers une valve (147a-b).

7. Module (100) selon l'une des revendications 1 à 6, **caractérisé en ce que** le porte-support (152) présente un plot (186) qui est concentrique avec la matrice (108) lorsque le porte-support (152) est en position active.
